# EUROPEAN PATENT SPECIFICATION

(11) **EP 1 336 781 B1**
(45) Date of publication and mention of the grant of the patent: **26.10.2005**
(21) Application number: 01947477.4
(22) Date of filing: 10.07.2001
(51) Int. Cl.: F16K 15/03

(54) **CHECK VALVE**
RÜCKSCHLAGVENTIL
SOUPAPE DE RETENUE

(43) Date of publication of application: 20.08.2003
(73) Proprietor: BELGICAST INTERNACIONAL, S.L., 48100 Munguia, Vizcaya (ES)
(72) Inventor: GALLEGO BUZON, Ma del Carmen, E-28918 Leganes (ES)
(74) Representative: Esteban Perez-Serrano, Maria Isabel
(86) International application number: PCT/ES2001/000278
(87) International publication number: WO 2003/006862

(56) References cited:
- ES-U- 1 009 676
- ES-U- 1 013 901
- US-A- 5 381 821
- US-A- 5 711 343
- US-A- 5 819 790
- DATABASE EPODOC [Online] XP002963198 & DE 34 02 203 A 01 August 1985
- PATENT ABSTRACTS OF JAPAN & JP 2000 193107 A (TOMOE TECH RES CO) 14 July 2000
- PATENT ABSTRACTS OF JAPAN & JP 10 292 874 A (TOMOE GIJUTSU KENKYUSHO: KK) 04 November 1998

## Description

### OBJECT OF THE INVENTION

The invention disclosed herein comprises a check valve of those which have two internal plates or doors which are hinged about a central vertical axle.

This valve is characterized in the presence of two seatings formed by a slightly tapered prismatic recess, one upper and another lower.

On these seatings are lodged two identical cylindrical bars, one is the axle and support of the plates and the other serves to limit the opening of the two plates.

It is characterized in a coating by means of vulcanizing the interior surface of the main body including the upper and lower seating recesses.

The valve object of the present invention also lacks perforations which can communicate the internal channel with the exterior avoiding leakage through poor fluid-tightness.

Equally, it has the facility for removing the internal assembly of pieces by simple extraction for a simple and quick exchange of the elements thereof and without requiring the use of ancillary means of securing.

### BACKGROUND OF THE INVENTION

The double plate structure is known and widely employed for check valves.

This type of valve has some means of hinging about a vertical axle which allow the lowering of two D-shaped plates.

By means of these two D-shaped plates it is possible to cover the circular internal area of the valve and therefore totally shut it.

When the internal fluid establishes a difference of pressures favorable to the opening of the plates, these open up until one is parallel to the other.

When the difference of pressures which has resulted in the opening of the plates vanishes, an internal spring restores the initial situation shutting the valve.

Likewise, in the event of a possible return of the fluid or for a hammer effect, the appearance of an adverse pressure gradient causes the shutting of the plates avoiding that the propagation thereof beyond the valve.

Patent and Utility Model documents are known which describe valves with this operation.

The Spanish utility model published with number 1009676 describes a check valve in fluid conveying pipes based on a double plate, central return spring and double axle.

One axle is dedicated to allowing the rotation of the two plates as well as securing the center of the spring, and a second axle limits the opening of the two plates.

The axles should be introduced through an upper perforation which has to be sealed appropriately to assure total fluid-tightness.

The Spanish Utility Model published with number 1013901 envisions another check valve in which diverse variants are shown, both in the seatings which guarantee the closing through the action of the plates and in the means which limit the opening thereof.

The valve described in this Utility Model, likewise requires in its construction, the presence of an upper perforation in the body of the valve to allow the axle of the plates to be introduced.

This perforation is sealed by means of a threaded plug which prevents both the leakage of fluid to the exterior and any type of vibration in the axle.

Mention is also made of the US Patent document P/N 5711343 in which a double plate valve is disclosed with an operation similar to that of the preceding Utility Models and in which special stress is placed on the seatings which permit the total shutting of the valve.

In the valve described in this Patent, just as in the preceding Models, use is made of two axles which have to be introduced through two upper perforations in the body of the valve.

The axles reach two seatings practiced in the lower part and the upper perforations have to be sealed.

The present invention shows an arrangement of elements which obviates the requirement to practice perforations for introducing and securing the axles of the plates.

Thus, the possibility of leaks through such perforations disappears and it is possible to vulcanize the whole internal surface of the body of the valve for its total protection.

It is known in the State of the art a valve as the one disclosed in US5381821 where in the second embodiment of the invention is disclosed a check valve which comprises a body and a flapper assembly which comprises two semicircular flappers members and two holding members. Theses holding members are used for fixing the flappers to the main body. The holding members has a outer surface of the same profile as that of the surface of the bore so that they will be a close fit against the wall on the valve body. To prevent rotation of flappers relative to the valve body some retaining means are used. These retaining means are based in the use of locating pins positioned in the seating. Those pins are positioned in bores and are spring loaded upward as by compression springs. On the other hand and in collaboration with said pins, in the holding members or keepers there are some bores to receive the pins. For pushing down the pins some holes are provided in the keepers when it is desired to remove the flapper assembly. So the main aim of our invention is to overcome the afore mentioned disadvantages developing a new way for fixing the flappers to main body of the valve.

### DESCRIPTION OF THE INVENTION

The invention object of the present specification refers to a check valve of those which have two D-shaped internal plates mounted symmetrically as means of shutting.

This type of valve has a quick response to hammering, performs well under not very high temperature conditions and is of simple construction since it does not require a large number of parts.

The valve is formed by a cylindrical main body with seatings with connection to the pipes on one side and the other.

The interior of the cylindrical body presents a vertical bar coincident in direction with that of the hinge axle of the shutter plates.

This vertical bar establishes the closure along the hinge line at the same time that it protects the closure assembly.

The fluid intake side to the valve has on each side of this vertical bar a convergent throat which guides the intake flow until coincident with the internal area of the shutter plates.

This convergent intake defines after it a perimeter step whereon the shutter plates are seated when they close the valve.

When the fluid establishes a pressure in the favorable direction through the intake throat, the plates are folded overcoming the resistance of a spring until they are parallel to each other and with respect to the flow.

The opening of the plates is limited by the presence of an axle or cylindrical bar located at a certain distance downstream.

After the vertical bar which traverses the body of the valve and in the internal face of the body of the valve there are two slightly tapered prismatic recesses, one in the upper part and the other in the lower part.

These two recesses serve to seat two prismatic bodies, also slightly tapered, which have two blind perforations.

The blind perforations of both of the bodies are opposite and serve to house two cylindrical bars, one the axle of the shutter plates with the return spring thereof, and the other one as rotation butt of these plates.

The body of the valve does not therefore require perforations through which the two vertical bars for support of the shutter assembly are introduced.

Also, it is possible to vulcanize the whole interior of the body of the valve including the two prismatic seatings.

In the assembly, the shutter plates are introduced with their return spring on the axle.

This axle together with the bar or axle which serves as butt are housed in the prismatic seatings facing them.

All this assembly is introduced by sliding it into the slightly tapered recesses by exercising the necessary pressure.

The flexibility of the vulcanizing allows a seating with support over all its area and a good checking action.

The result obtained is an assembly formed by the tapered prismatic supports, the two axles, and the two plates with a return spring; which assembly is easily interchangeable and the securing of which is guaranteed by means of the vulcanizing present on the surface of the recess wherein it is lodged.

Once the valve is installed facing the seating of the pipe, it is this seating which assures that the internal assembly of parts does not come out.

Also, when the pressure in the convergent mouth less the pressure on the other side of the valve is negative, the securing of the internal group is favored; and, if this difference of pressures is positive the plates open up allowing the fluid to pass and therefore a minimum relieving force is exercised which is easily withstood by the securing means.

It is also the interior vulcanizing which assures the seal in the seatings of the shutter plates.

### DESCRIPTION OF THE DRAWINGS

The present descriptive specification is completed with a set of drawings, to illustrate the preferred embodiment of the invention but in no way restrictive.

Figure 1 shows a perspective of the valve with a quarter section which allows the different pieces of the interior of the valve to be seen.

Figure 2 is an elevation and plan view of the valve.

Figure 3 is an elevation and profile of the same valve.

### PREFERRED EMBODIMENT OF THE INVENTION

In the light of the foregoing, the present invention consists of a double-plate check valve.

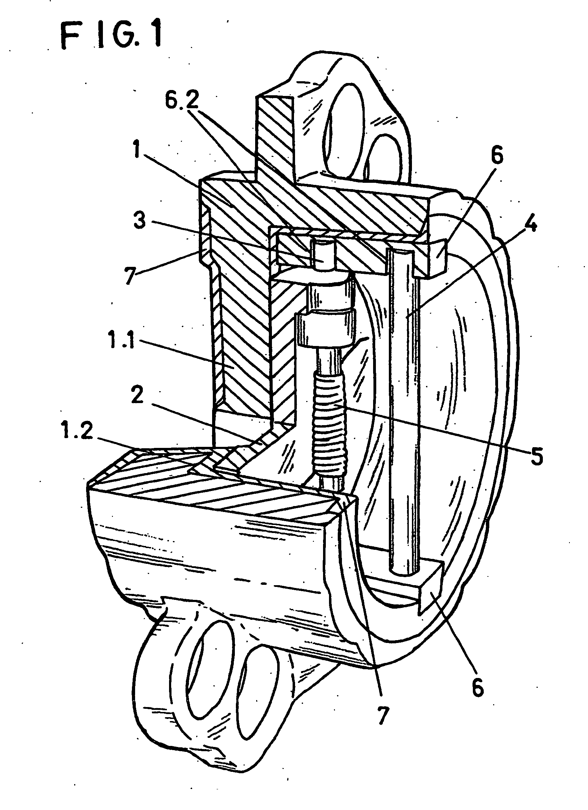

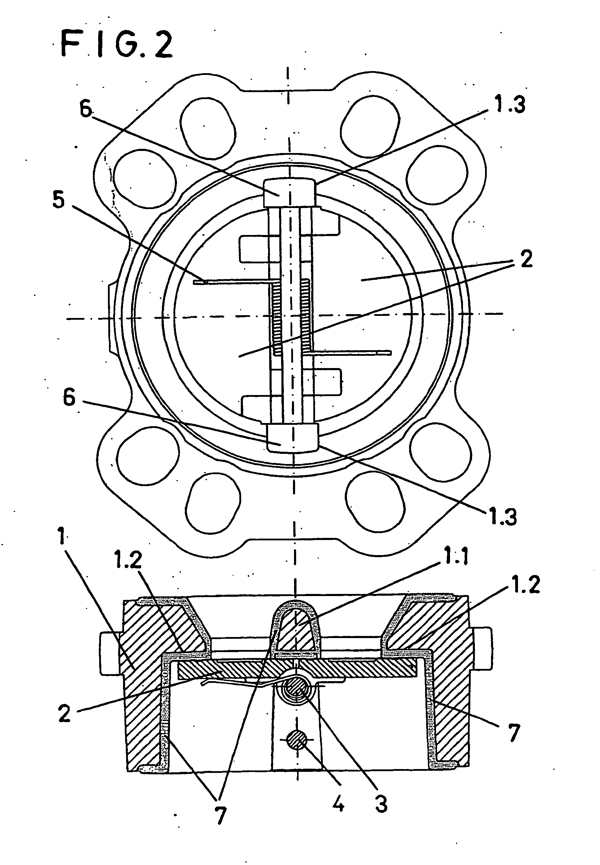

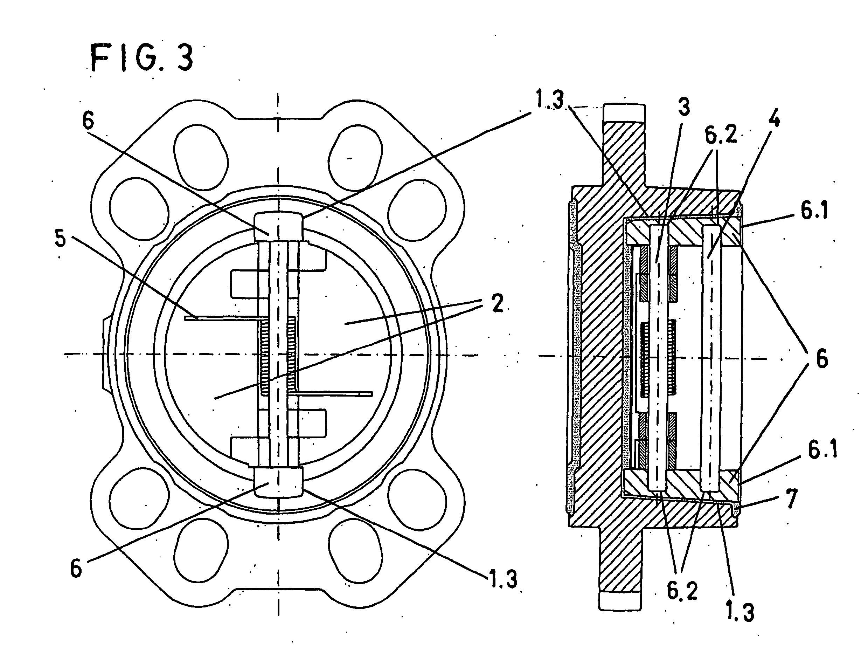

Figure 1 shows an outline of the external configuration of a preferred embodiment of the valve with a quarter section which allows part of its interior to be seen, whilst figures 2 and 3 show the same embodiment in elevation and plan, and in elevation and profile respectively.

This valve is formed by a basically cylindrical external body (1) which has a central vertical bar (1.1) with rounded front on the side of the fluid intake.

The intake has a truncated conical shape and defines a convergent throat which in turn is divided into two channels by the presence of the central bar (1.1).

The fluid so conveyed reaches the shutter plates (2), each one closing a channel.

After the truncated conical intake there is a sudden expansion by means of a step (1.2) which defines the coplanar closing seatings.

The plates (2) have a common axle of rotation slightly displaced downstream and these close when seated on the rear part of the vertical bar (1.1) and of the step (1.2) immediately after the narrowest neck in the intake throat.

This axle of rotation is formed by a cylindrical bar (3) which in turn traverses the center of the return spring (5) of the shutter plates (2) for the securing thereof.

A second bar (4) arranged parallel to the axle bar (3) of the shutter plates (2), and located at a certain distance downstream serves to limit the opening of the plates (2).

Both bars (3, 4) are housed in some cylindrical opposing perforations (6.2) present in two slightly tapered prismatic supports (6) which are located one above and the other below.

These two supports (6) are each wedged in individual recesses (1.3) also tapered.

The entirety of the internal surface of the body (1) of the valve is vulcanized (7) and it is the vulcanizing (7) which assures an adequate seating and securing of the tapered supports (6).

Likewise, the vulcanizing (7) of the rear flat part of the central bar (1.1) and of the step (1.2) after the throat of the truncated conical intake assures the appropriate seal on the seating of the shutter plates (2).

The use of the recesses (1.3) with rear inlet of the supports (6) and therefore of the whole assembly, obviates the presence of perforations which can favor poor fluid-tightness of the valve, as well as allowing the total protection of the main body (1) by means of the vulcanizing (7).

Thus, it is possible to use this valve in the conveying of fluids which could attack the material of the body of the valve since its surface is not presented to the internal fluid.

The interior sealing assembly is secured, once the valve is installed, by the pressure of the seat of the pipe on the external face (6.1) of the supports (6).

The essential nature of this invention is not altered by variations in materials, form, size and arrangement of the component elements, described in a non-restrictive manner, this being sufficient for an expert to proceed to its reproduction.

## Claims

1. Check valve, of among the check valves which incorporate a D-shaped double plate in co-operation with a return spring and means of limiting its opening, being constituted by a cylindrical main body (1) with an inlet which has a convergent truncated conical configuration, and in the centre has a bar (1.1) rounded on the external face which divides the flow in two; the rear part of the central bar (1.1) which is flat and a rear step (1.2) located after the inlet throat are coplanar and constitute the seating for the closing of the valve by means of two D-shape shutter plates (2) mounted in opposition; these shutter plates (2) are hinged by means of a common axle (3) parallel to the central bar (1.1) which in turn incorporates a return spring (5); it also incorporates another axle (4) parallel to the hinge axle (3) and displaced downstream to limit the opening of the plates (2); and both axles (3,4) are housed in cylindrical perforations (6.2) arranged opposite to each other on two prismatic bodies (6), **characterised in that** the prismatic bodies (6) for holding the ends of the axles (3,4) are tapered and housed in two slightly tapered internal recesses (1.3) present in the main body of the valve; wherein the internal surface of the main body (1) of the valve, including the recesses (1.3) for the prismatic bodies (6) is vulcanised (7).

2. Check valve, according to claim 1 **characterized in that** the vulcanizing (7) of the rear flat part of the central bar (1.1) and the vulcanizing (7) of the step (1.2) after the throat of the convergent truncated conical intake serve as seating for the shutter plates (2).

3. Check valve according to the previous claims **characterized in that** the assembly formed by the tapered prismatic bodies (6), the two shutter plates (2) with the return spring (5) thereof and the two axles (3, 4), is an assembly easily and quickly extracted and interchanged; and this assembly does not require the use of securing fittings.

## Patentansprüche

1. Rückschlagventil von den Rückschlagventilen, die über eine D-förmige doppelte Scheibe verfügen, die mit einer Rückholfeder zusammen arbeitet und Mittel, dessen Öffnen zu begrenzen, wobei es aus einem zylinderförmigen Hauptkörper (1) besteht, mit einem Zugang, der eine auseinanderlaufende, kegelstumpfförmige Gestaltung aufweist und in der Mitte über eine Stange (1.1) verfügt, die auf der äusseren Seite abgerundet ist und den Durchfluss teilt; der hintere Teil der Mittelstange (1.1), der flach ist und ein hinterer Abschnitt (1.2), der sich hinter dem Zugangshals befindet und die Dichtung für den Ventilverschluss mittels zweier D-förmiger Dichtscheiben (2) darstellt, die gegenüberliegend angebracht sind; diese Dichtscheiben (2) sind gelenkig durch eine herkömmliche Welle (3) und parallel zur Mittelstange (1.1), die ihrerseits über eine Rückholfeder (5) verfügt; ausserdem verfügt es über eine weitere Welle (4), die sich parallel zur Gelenkwelle (3) befindet und versetzt in Fliessrichtung angebracht ist, um das Öffnen der Scheiben (2) zu begrenzen; und beide Wellen (3, 4) werden von zylindrischen Bohrungen (6.2) aufgenommen, die einander gegenüberliegend auf zwei Prismenkörpern angeordnet sind, **dadurch gekennzeichnet, dass** die Prismenkörper (6) zur Aufnahme der Enden der Wellen (3,4) kegelförmig sind und von zwei inneren, leicht kegelförmigen Aussparungen (1.3) aufgenommen werden, die sich im Hauptkörper des Ventils befinden; wobei die innere Oberfläche des Hauptkörpers (1) des Ventils, einschliesslich der Aussparungen (1.3) für die Prismenkörper (6) vulkanisiert ist.

2. Rückschlagventil gemäss Anspruch 1, **dadurch gekennzeichnet, dass** das Vulkanisieren (7) des hinteren flachen Teils der Mittelstange (1.1) und das Vulkanisieren (7) des Abschnitts (1.2) hinter dem Hals des auseinanderlaufenden kegelstumpfförmigen Zugangs als Aufnahme für die Dichtungsscheiben dient.

3. Rückschlagventil gemäss den vorangegangenen Ansprüchen, **dadurch gekennzeichnet, dass** die Anordnung aus den kegelförmigen Prismenkörpern (6), den zwei Dichtungsscheiben (2) mit deren Rückholfeder (5) und den zwei Wellen (3,4) eine leicht und schnell ausbaubare und austauschbare Anordnung ist; und diese Anordnung erfordert nicht die Verwendung von Befestigungszubehör.

## Revendications

1. Clapet anti-retour, parmi les clapets anti-retour qui incorporent une double plaque sous forme de D en coopération avec un ressort de rappel et des moyens pour limiter son ouverture, étant constitué par un corps principal cylindrique (1) avec une ouverture qui a une configuration tronconique convergente, et au centre il a une barre (1.1) arrondie sur la face extérieure qui divise le flux en deux; la partie arrière (1.1) qui est plate et un échelon arrière (1.2) situé après l'embouchure d'entrée sont coplanaires et constituent le siège pour la fermeture du clapet au moyen de deux plaques d'obturation (2) sous forme de D montées en opposition ; ces plaques d'obturation (2) sont articulées au moyen d'un axe commun (3) parallèle à la barre centrale (1.1) qui a son tour incorpore un ressort de rappel (5) ; il incorpore un autre axe (4) parallèle à l'axe charnière (3) et déplacé en aval pour limiter l'ouverture des plaques (2) ; et les deux axes (3,4) sont logés dans des perforations (6.2) aménagées l'une en regard de l'autre sur deux corps prismatiques (6), **caractérisé en ce que** les corps prismatiques (6) pour retenir les extrémités des axes (3,4) sont coniques et logés dans deux évidements internes (1.3) légèrement coniques présents dans le corps principal du clapet ; dans lequel la surface intérieure du corps principal (1) du clapet qui comprend les évidements (1.3) pour les corps prismatiques (6), est vulcanisée (7).

2. Clapet anti-retour selon la revendication 1, **caractérisé en ce que** la vulcanisation (7) de la partie plate arrière de la barre centrale (1.) et la vulcanisation (7) de l'échelon (1.2) après l'embouchure de l'amenée tronconique convergente servent de siège pour les plaques d'obturation (2).

3. Clapet anti-retour selon les revendications antérieures, **caractérisé en ce que** l'ensemble formé par les corps prismatiques coniques (6), les deux plaques d'obturation (2) avec leur ressort de rappel (5) et les deux axes (3,4), est un ensemble facile et rapide d'extraire et de changer ; et cet ensemble n'a pas besoin de l'utilisation d'accessoires de sécurité.
